# EUROPEAN PATENT APPLICATION

(11) **EP 2 755 334 A1**
(43) Date of publication of application: **16.07.2014**
(21) Application number: 13151232.9
(22) Date of filing: 15.01.2013
(51) Int. Cl.: H04B 3/54, H02H 7/26

(54) **Inter-zone communication in industrial control systems**

(71) Applicant: ABB Technology AG, 8050 Zürich (CH)
(72) Inventor: Wimmer, Wolfgang, 5323 Rietheim (CH)
(74) Representative: ABB Patent Attorneys

(57) **Abstract**

The present invention is concerned with an Industrial Automation and Control System (IACS) for an industrial process with a process or primary structure including several neighbouring zones connected via a connecting, or boundary, primary device or element. The IACS includes a number of communicatively interconnected Intelligent Electronic Devices (IEDs), wherein low-level, or process-level, IEDs interact with and are assigned to primary devices of the industrial process, and wherein several high-level, or system-level, IEDs implement and execute high-level functions on behalf of the several zones. The IACS includes a logical communication link between the two high-level IEDs for bypassing the connecting IED in case of communicative unavailability or complete failure of the latter. The communication link enables to transmit or exchange, between the high-level IEDs, summarized or pre-processed process information including data and signals originating from one or more low-level IEDs of a first of the zones and relevant for a high-level function on behalf of some other zones. This reduces the communication load at the higher level function and in the communication network while maintaining an availability level comparable to a completely central solution.

## Description

### FIELD OF THE INVENTION

The invention relates to the field of process control systems for controlling large-scale industrial processes, and in particular to substation automation systems for operating substations in high and medium voltage power networks. More particularly, the invention relates to higher level functions depending on information from zone-connecting intelligent electronic devices of the process control or substation automation system.

### BACKGROUND OF THE INVENTION

Process control or industrial automation systems are used extensively to protect, control and monitor industrial processes in industrial plants for e.g. manufacturing goods, transforming substances, or generating power, as well as to monitor and control distributed primary systems like electric power, water or gas supply systems or telecommunication systems, including their respective substations. An industrial automation system generally has a large number of process controllers or intelligent electronic devices distributed in an industrial plant or spread over a distributed primary system, and communicatively interconnected via a communication system.

Substations in high and medium-voltage power networks include primary devices such as electrical cables, lines, bus bars, switches, power transformers and instrument transformers, which are generally arranged in switch yards and/or bays. These primary devices are operated in an automated way via a Substation Automation (SA) system. The SA system comprises secondary devices, so-called Intelligent Electronic Devices (IEDs), responsible for protection, control and monitoring of the primary devices. The IEDs may be hierarchically assigned to one of a station, bay, or process level. The station level of the SA system includes an Operator Work Station (OWS) with a Human-Machine Interface (HMI) and a gateway to a Network Control Centre (NCC). IEDs on the bay level, also termed bay units, in turn are connected to each other as well as to the IEDs on the station level via an inter-bay or station bus primarily serving the purpose of exchanging commands and status information. IEDs on the process-level comprise electronic sensors for voltage (VT), current (CT) and gas density measurements, contact probes for sensing switch and transformer tap changer positions, and/or intelligent actuators (I/O) for controlling switchgear like circuit breakers or disconnectors. Exemplary process-level IEDs such as non-conventional current or voltage transformers comprise an Analogue to Digital (AD) converter for sampling of analogue signals. Process-level IEDs are connected to the bay units via a process bus, which can be considered as a process interface replacing conventional hard-wired point-to-point connections.

A communication standard for communication between the secondary devices of a substation has been introduced by the International Electrotechnical Committee (IEC) as part of the standard IEC 61850 entitled "communication networks and systems for power utilities". The standard defines formats to publish, as multicast messages on an industrial Ethernet, time-critical event-based messages as Generic Object Oriented Substation Events (GOOSE) as well as digitized measurement data from current or voltage sensors on the process level as Sampled Values (SV). GOOSE and SV messages are generally transmitted over a process bus that may extend to neighbouring bays beyond the bay to which the sensor or source IED is assigned.

In distributed process control systems, higher level functions implemented on higher level controllers rely on pluralities of lower level process controllers providing the needed input data and serving as actuators to the process. Higher level functionality may be structured according to zones or sections, where a zone defines an area or sector of the industrial process, i.e. a group of interrelated or interconnected primary devices or elements. A higher level function instance interacts with primary devices of a same kind or type, such as all the sensors, valves, drives, or breakers, within a specific zone in a coordinated manner, including in a same way. Higher level functions may be chained or interlinked via connecting or shared low level process controllers that interact with two or more higher level controllers assigned to mutually neighbouring zones.

Exemplary higher level functions from the substation automation area include functions protecting against a failure of primary devices, like breaker failure protection or bus bar protection, which do operate beyond the scope of an individual failing primary device. In substations, so-called protection zones comprise a number of switchyard elements that are to be isolated simultaneously in case of a failure of a primary device, and the boundary or circumference of a protection zone may be defined by circuit breakers and open disconnectors. Two neighbouring protection zones are separated in the switch yard by a so-called "connecting bus section" that comprises at least one circuit breaker and up to two disconnectors.

By way of example, if a bay circuit breaker which is tripped by a line protection function does not open due to an internal failure, a so-called breaker failure protection function is triggered, and a trip signal is propagated to circuit breakers in protection zones adjacent to the failing circuit breaker. In other words, the task of breaker failure protection is to detect that a breaker has failed to clear a fault, and to trip all the remaining breakers feeding into the zone(s) containing the fault in order to clear the fault for good. Likewise, the task of bus bar protection is to detect any fault on the bus bar, and to trip the breakers connected to, or delimiting, the affected bus bar zone.

A breaker failure protection function implemented on one IED per bus bar protection zone depends on a process bus providing the analogue data and transmitting circuit breaker trip signals. The function is based on the state of all switches in the protection zone and trips all circuit breakers of the zone in case a trip failure of a single of the circuit breakers occurs. A breaker in a connecting bus section is being used by, or part of, the bus bar zones at both sides of the connecting bus section, and a connecting IED assigned to the connecting bus section may have to forward a trip command from a first zone to a second, neighbouring zone. However, in case the IED assigned to this bus section fails, a zone trip cannot be successful, and the breaker failure function triggered by a failing breaker in one of the neighbouring zones is bound to fail.

A conventional solution addressing the abovementioned problem in connection with the breaker failure function includes a central IED handling all zones such that in case of failure of a low level IED corresponding to a connecting bus section any zone concatenation or redefinition can be done in the central IED. Nevertheless central protection systems remain less suitable for larger substations due to the high amount of data to be processed, i.e. the communication load on the central IEDs as well as inside the communication network is one of the reasons why the higher level functionality is split according to zones in the first place. Another solution introduces redundancy by doubling the critical low level IEDs, i.e. by having a second breaker failure function related IED at the connecting bus section. This solution beneath additional cost for the additional IED increases the engineering effort and renders the system more complex.

### DESCRIPTION OF THE INVENTION

It is therefore an objective of the invention to render a high level, zone-based function in an Industrial Automation and Control System (IACS) more robust against a failure of a low level Intelligent Electronic Device interacting with a zone-connecting primary device of an industrial process controlled by the IACS. This objective is achieved by an IACS and a method according to the independent claims. Preferred embodiments are evident from the dependent patent claims.

According to the invention, an Industrial Automation and Control System (IACS) controls an industrial process with a process or primary structure including two neighbouring zones connected or linked via a connecting, or boundary, primary device or element. The IACS includes a number of communicatively interconnected Intelligent Electronic Devices (IEDs) or process controllers, wherein low-level, or process-level, IEDs interact with and are assigned to primary devices of the industrial process, and wherein two high-level, or system-level, IEDs implement and execute high-level functions on behalf of the two zones, each high-level function being based on, or involving, all low level IEDs assigned to primary devices of a same kind within a zone. The two high-level IEDs communicate with a low level connecting IED that interacts with the connecting primary device. The IACS includes a logical communication link between the two high-level IEDs for bypassing the connecting IED in case of communicative unavailability or complete failure of the latter. The communication link enables to transmit or exchange, between the two high-level IEDs, process information including data and signals originating from a low-level IED of a first of the two zones and relevant for a high-level function on behalf of a second of the two zones.

In an advantageous embodiment of the invention, the IACS includes a means or supervisory module for supervising the connecting IED and for activating the logical communication link upon detection of communicative unavailability of the connecting IED.

A Substation Automation (SA) system operating a substation in a high or medium-voltage power network represents a preferred IACS according to the invention. The connecting IED of the SA system is interacting with a circuit breaker of a connecting bus bar section, and the high level function is one of a bus par protection or breaker failure protection function. Still preferably, the logical communication link involves an exchange of GOOSE messages and/or SV messages via a process bus of a substation communication network, in which case the additional logical link may use existing physical communication infrastructure and does not require any additional hardware. Alternatively, a station bus interconnecting exclusively the high level IEDs may be provided in addition.

In summary, data, status, or trigger messages for higher level zone-oriented functions are forwarded between high level coordination controllers in case of unavailability of a connecting process controller or IED. This enables distributing higher level functions onto several high-level IEDs to reduce the communication load at the higher level function and in the communication network while maintaining an availability level comparable to a completely central solution. The invention allows aggregation of several higher level functions on behalf of one zone, and/or of several function instances on behalf of several zones, on one high-level IED. In other words, one high-level IED may be assigned to several, but not all zones of the industrial process. For very large substations implementation of bus bar protection and breaker failure function is facilitated, along with other higher level functions including e.g. bus bar differential, breaker failure and virtual VT / central synchrocheck, as well as load shedding.

The present invention also relates to a computer program product including computer program code for controlling one or more processors of a high-level IED adapted to be connected to a communication network of an Industrial Automation and Control System IACS according to the invention, particularly, a computer program product including a computer readable medium containing therein the computer program code.

### BRIEF DESCRIPTION OF THE DRAWINGS

The subject matter of the invention will be explained in more detail in the following text with reference to preferred exemplary embodiments which are illustrated in the attached drawings, in which:
Fig.1 schematically shows an electrical single-line diagram of a substation switchyard;
Fig.2 depicts a part of the bus bar of Fig.1 as well as corresponding process controllers.

### DETAILED DESCRIPTION OF PREFERRED EMBODIMENTS

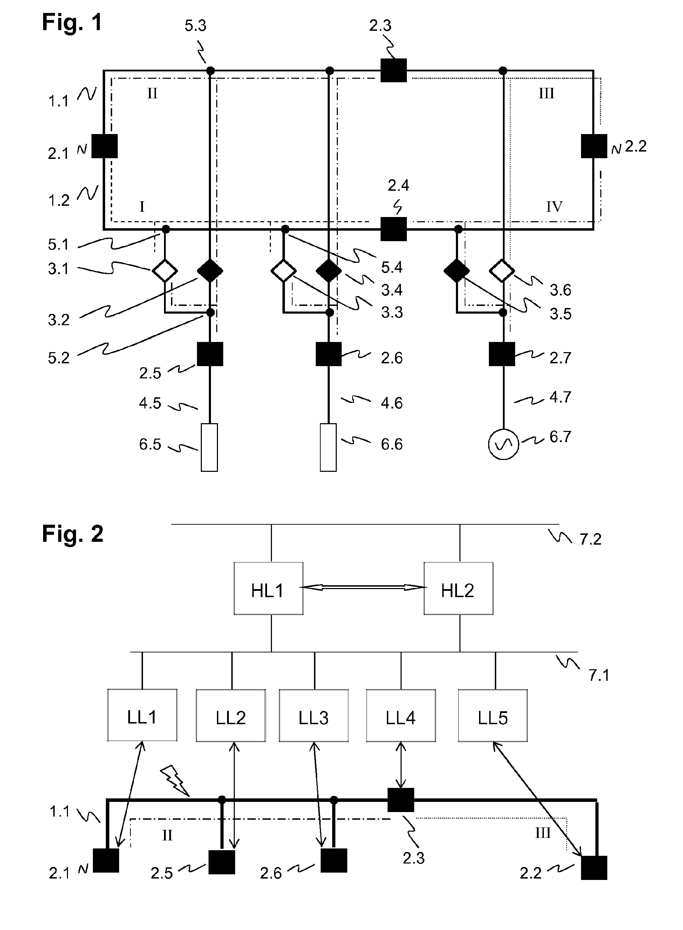

Fig.1 depicts an electrical single-line diagram of a switchyard of a substation in an electric power transmission network with an exemplary double busbar topology. The diagram comprises items or icons representative of various primary devices, such as bus bars 1, circuit breakers 2, disconnectors 3, line infeed or outgoing conductors 4, nodes 5, and loads or generators 6. Devices of the same kind are distinguished via a continued decimal digit, i.e. 5.1 and 5.2 denote two distinct nodes. Generally, icons representative of open switches (disconnectors and breakers), are shown outlined, whereas switches that are in a closed state are represented as filled icons, for instance, a closed/open disconnector is depicted by a black/white rhomb. Obviously, other topologies are conceivable, with or without bypass busses, and the topologies may comprise other primary devices such as power transformers, generators, ground isolators and instrument transformers without limiting the applicability of the present invention.

In detail, the topology depicted comprises two coupling circuit breakers 2.1, 2.2 separating two bus bars 1.1, 1.2, which in turn are divided in two sections by section circuit breakers 2.3, 2.4. Three bays are depicted, each comprising a bay circuit breaker 2.5, 2.6, 2.7 connected via conductors 4.5, 4.6, 4.7 to distant loads 6.5, 6.6 or a generator 6.7. The bay circuit breakers are each connectable to the two bus bars via two disconnectors 3.1, 3.2; 3.3, 3.4 and 3.5, 3.6. As mentioned previously, protection zones are electrically connected parts of the switchyard which are delimited by open disconnectors and open or closed circuit breakers. The states of the disconnectors as depicted in Fig.1 give rise to four protection zones I, II, III, IV in the sense of the present invention, which are indicated by broken lines of different patterns next to the sections of the bold-type single line diagram.

Fig.2 depicts, at the bottom, a part of the bus bar 1.1 of Fig.1 including section circuit breaker 2.3 and neighbouring protection zones II, III. In addition to the primary devices depicted in Fig.1, substations comprise secondary equipment or Intelligent Electronic Devices (IEDs) such as low level IEDs LL1 to LL5 and high level IEDs HL1, HL2 interconnected via a process bus 7.1 and station bus 7.2. In the exemplary event of a bus bar failure in zone II of bus bar 1.1 as indicated by the lightning bolt, the circuit breakers 2.1, 2.5, 2.6 and 2.3 delimiting protection zone II have to trip or open. Corresponding trip messages are propagated over the substation communication network to the IEDs LL1, LL2, LL3, and LL4 assigned to and controlling the respective circuit breakers. A similar situation arises in case of an exemplary breaker failure of breaker 2.1, and the ensuing breaker failure protection messages directed to breakers 2.5, 2.6 and 2.3 in zone II as well as to breaker 2.4 in protection zone I.

Now, in case that the low level IED LL4 is unavailable, so is the connecting circuit breaker 2.3 for the purpose of bus bar protection or breaker failure protection, and a zone trip cannot be forwarded from one zone to the other in a conventional way. According to the invention, the additional logical link as indicated by the horizontal double arrow in Fig.2 and appropriate function extensions at higher level the trip messages can be forwarded from high level IED HL1 via HL2 to low level IED LL5 in turn controlling operation of the circuit breaker 2.2.

The bypass forwarding according to the invention may be activated permanently and complemented by some kind of trigger implemented at the receiving IED LL5 to account for an actual failure of connecting breaker 2.3 or assigned connecting IED LL4, only in which case the forwarded messages must not be ignored. However, as a corresponding confirmation of connecting breaker or IED unavailability upon receipt of a trip message might delay execution of the zone trip by IED LL5, it appears preferable to activate the forwarding bypass exclusively upon established failure at the zone boundary.

A specific example of bus bar protection includes a bus bar differential function that evaluates a non-zero sum of the bus bar currents to trip. In case of missing node current information from the connecting bus section at LL4 due to unavailable connecting IED LL4, the missing value may be replaced by the sum of the currents from the respective neighbour zone. Accordingly, the high level IEDs HL1, HL2 both calculate, from known data of the corresponding zone II, III, sum data that is subsequently provided to the respective counterpart high level IED HL2, HL1. In other words, the process information exchanged may include summarized or pre-processed data originating from a plurality of low-level IEDs.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. An Industrial Automation and Control System IACS controlling an industrial process with a process structure including two zones (II, III) connected via a connecting primary device (2.3), the IACS including a number of communicatively interconnected Intelligent Electronic Devices IEDs, with low level IEDs (LL1 to LL5) interacting with primary devices (2.1 to 2.7; 3.1 to 3.6) of the industrial process, and with two high level IEDs (HL1, HL2) each implementing high level functions on behalf of one of the two zones, respectively,
**characterized in that** the IACS includes a logical communication link between the two high-level IEDs to transmit, in case of unavailability of a connecting IED (LL4) interacting with the connecting primary device, process information originating from a first of the two zones and relevant for a high level function on behalf of a second of the two zones.

2. The IACS of claim 1, **characterized in that** it includes means for supervising the connecting IED and for activating the logical communication link.

3. The IACS of claim 1 or 2, wherein the IACS is a Substation Automation SA system operating a substation in a high or medium-voltage power network, and wherein the high level function is one of a bus par protection or breaker failure protection function.

4. The IACS of claim 3, wherein the logical communication link includes an exchange of GOOSE or SV messages between the two high-level IEDs (HL) via a process bus (7.1) or via a station bus (7.2) of a substation communication network.

5. A method of operating an Industrial Automation and Control System IACS controlling an industrial process with a process structure including two zones (II, III) connected via a connecting primary device (2.3), the IACS including a number of communicatively interconnected Intelligent Electronic Devices IEDs, with low level IEDs (LL1 to LL5) interacting with primary devices (2.1 to 2.7; 3.1 to 3.6) of the industrial process, and with two high level IEDs (HL1, HL2) each implementing high level functions on behalf of one of the two zones, respectively, comprising
- establishing a logical communication link between the two high-level IEDs to transmit, in case of unavailability of a connecting IED (LL4) interacting with the connecting primary device, process information originating from a first of the two zones and relevant for a high level function on behalf of a second of the two zones.

6. The method of claim 5, comprising
- activating the logical communication link upon detection of a failure of the connecting IED.

7. The method of claim 5 or 6, wherein the IACS is a Substation Automation SA system operating a substation in a high or medium-voltage power networks, and wherein the high level function is one of a bus par protection or breaker failure protection function.
